# EUROPEAN PATENT APPLICATION

(11) **EP 1 199 687 A2**
(43) Date of publication of application: **24.04.2002**
(21) Application number: 01308827.3
(22) Date of filing: 17.10.2001
(51) Int. Cl.: G07F 11/44, G07F 11/58

(54) **Method and apparatus for delivering confectionery or the like in a vending machine**

(30) Priority: 18.10.2000 JP 2000317455
(71) Applicant: Kabushiki Kaisha Finetec, Tokyo (JP)
(72) Inventor: Matsuda, Takao, c/o Kabushiki Kaisha Finetec, Tokyo (JP)
(74) Representative: Stevens, Jason Paul

(57) **Abstract**

In a confectionery vending machine (1), a plurality of pockets (14) are provided on a lift belt (12) which is revolved upon driving of a motor (13). The pockets pick up a certain number of confectioneries as determined within a range of setting of a dip switch (17), and deliver the confectioneries when the pockets move over the top of the lift belt.

## Description

The invention relates to a method of delivering confectionery or the like in an automatic vending machine for delivery of confectionery of different kinds, and an automatic confectionery vending machine, and has the feature of making the number of confectioneries being delivered variable to provide for a gaming property.

Conventionally, there have been known automatic vending machines, by which desired soft drink and tobacco are delivered when an amount of money is inserted. Also, there are known devices for acquisition of confectioneries, in the form of equipment for amusement parks or the like, in which confectioneries are acquired by the operation of a crane actuated upon insertion of money. Recently, machines with a gaming property and entertainingness have been developed such as a gift acquisition machine for acquisition of gifts (Japanese Patent Laid-Open No. 88246/1995), an automatic vending machine with video games, in which a video game can be played during cooking of food (Japanese Patent Laid-Open No. 7572/1999), and the like.

However, automatic vending machines for only delivery of commodities lack entertainingness, and an equipment for amusement parks, in which confectioneries are acquired by the operation of a crane, involves lack of economy in that users of such equipment are frequently children, who are unskilful in crane operation, and cannot acquire confectioneries however much money is inserted.

Also, with the gift acquisition machine described in Japanese Patent Laid-Open No. 88246/1995, a gift is acquired by using a magnetic body attached to a swinging body, and so a magnetic plate must be attached to a gift. Therefore, taking into consideration labour and cost in attaching such magnetic plates to several hundreds of confectioneries, such gift acquisition machine is not suitable for this application, which is intended for delivery of small confectioneries such as candies.

Further, with the automatic vending machine with video games described in Japanese Patent Laid-Open No. 7572/1999, while food requiring processing is delivered, playing a video game serves to kill time. While the gaming property and entertainingness are had in common, such machine is again not suitable for this application, which involves delivering confectioneries not calling for processing and making the number of confectioneries being delivered variable, and so is quite different in object and problems.

It is an object of at least the preferred embodiments of the invention to provide an automatic confectionery vending machine, in which acquisition of confectioneries is surely performed and release of them is easily performed, and by which lack of economy such as spending too much money for acquisition of confectioneries is avoided and which possesses a gaming property and entertainingness, and a method of delivering a confectionery or confectioneries in a automatic confectionery vending machine.

To enable performing acquisition and release of a confectionery or confectioneries among the above-mentioned problems with ease and certainty, according to a first aspect of the invention there is provided a method of delivering confectionery in an automatic confectionery vending machine, comprising the steps of: revolving a lift belt provided with a plurality of pockets, the pockets thereby acquiring a confectionery or confectioneries; conveying a confectionery or confectioneries acquired by the pockets upward; and separating a confectionery or confectioneries conveyed at a point of time when the pockets go over a topmost point to begin descending.

Preferably, the method also includes the step of determining the number of confectioneries delivered on the basis of setting of a dip switch, prior to the step of using the pockets to acquire a confectionery or confectioneries.

In a further preferred form, the method includes the additional step of counting the number of confectioneries delivered with the use of a detection switch.

According to a second aspect of the present invention, there is provided an automatic confectionery vending machine for delivering a confectionery or confectioneries contained in a housing, comprising a strut provided upright through a confectionery receiving and bearing portion in said housing, pulleys provided on upper and lower portions of the strut, a lift belt mounted around the upper and lower pulleys, a plurality of pockets provided on the lift belt, and a motor as a drive source for revolving the lift belt.

Preferably, the machine also has a dip switch for setting the possibility for the number of confectioneries being delivered, and may also comprise a detection switch for counting the number of confectioneries being delivered.

In a preferred form, the machine also comprises a display unit provided on the housing for notification of the number of confectioneries being delivered.

In at least the preferred embodiments of the invention, a plurality of pockets provided on a lift belt, which revolves up and down, pick up confectioneries from below, so that it is possible to stably convey confectioneries thus picked up upwardly.

Further, since a magnetic body or a crane is not used for acquisition of confectionery, a confectionery in the pocket can be released and dropped with certainty when the pocket descends from a topmost location.

In addition, since a minimum number of confectioneries delivered can be set, and the number of deliveries is determined in the range of setting and is displayed in segmental representation, the problem of lack of economy is avoided and a user enjoys entertainingness in receiving the delivery of confectioneries with a feeling of game.

Preferred embodiments of the invention will now be described by way of example only and with reference to the accompanying drawings, in which:
Fig. 1 is a schematic perspective view showing the external appearance of an automatic confectionery vending machine according to a first embodiment of the invention;
Fig. 2 is a schematic view showing an internal construction of the automatic confectionery vending machine of Figure 1;
Fig. 3 is a view illustrating the procedure of actions in the case of using the automatic confectionery vending machine to acquire confectionery;
Figs. 4 to 6 represent a flowchart showing a flow of actions in the case of using the automatic confectionery vending machine to acquire confectionery; and
Fig. 7 is a flowchart showing a flow, along which an error generated during an action of getting confectionery is processed.

An explanation will be given below of preferred embodiments of the invention.

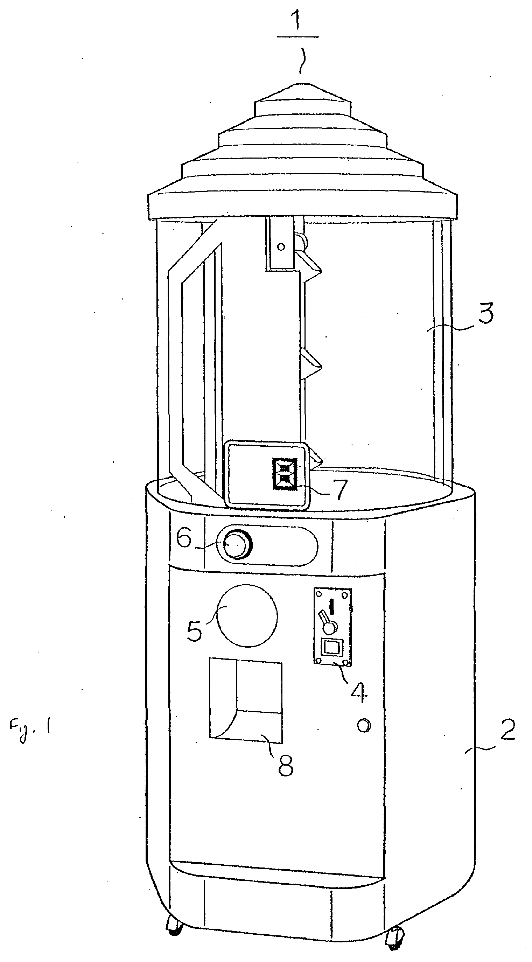

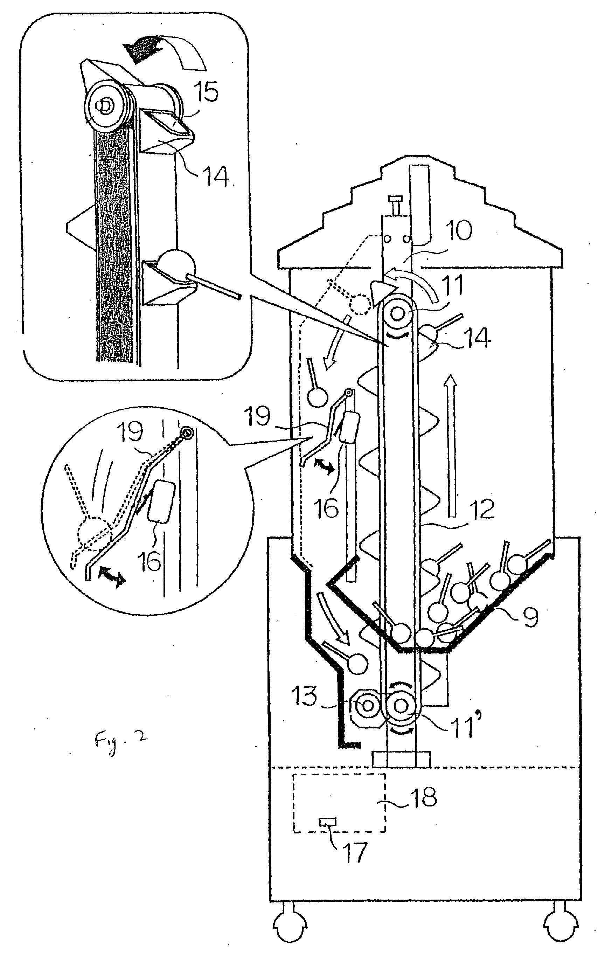

Fig. 1 is a schematic perspective view showing the external appearance of an automatic confectionery vending machine according to a first aspect of the invention, and Fig. 2 is a schematic view showing an internal construction of the embodiment of Fig. 1. The construction of the automatic confectionery vending machine will be described below on the basis of the embodiment shown in Figs. 1 and 2.

As shown in Fig. 1, a housing 1 consists integrally of a base 2 and a transparent cylindrical-shaped body 3 provided upright on a top thereof. In the embodiment of Fig. 1, a user optionally stops a randomizing device such as a roulette, which is actuated by insertion of a coin or coins, to determine the number of delivered confectioneries, and since the embodiment is of a type having background music (BGM) put on the air at the time of operation, a slot 4, a speaker 5 and a stop button 6 are shown as being provided on the base 2. Also, a display unit 7 is also provided to give a segmental representation of a numeral corresponding to the number of delivered confectioneries upon insertion of a coin or coins into the slot 4. Further, a delivery port 8 is also present to deliver therethrough confectionery acquired.

Provided within the housing 1 are a receiving and bearing portion 9 for accumulating confectioneries and a strut 10 extending through the bottom thereof to be upright, as shown in Fig. 2. The strut 10 is provided on upper and lower portions thereof, respectively, with pulleys 11, 11', between which a lift belt 12 is rotatably entrained. Also, mounted near the pulley 11' is a motor 13 for revolving the lift belt 12. Provided on the lift belt 12 are a plurality of pockets 14 adapted to revolve so that receiving openings 15 thereof are directed upward upon ascent and downward upon descent as the operation of the motor 13 revolves the lift belt 12. Also, a detection switch 16 is provided somewhere in the course of a confectionery leaving the pocket 14 and falling toward the delivery port 8 to detect the passage of the confectionery and count the number of the confectioneries.

Also, provided within the housing 1 are a dip switch 17 for determining the number of confectioneries delivered and a control unit 18. Data of confectioneries counted by the detection switch 16 are fed to the control unit 18 such that when the number of delivered confectioneries determined by the dip switch 17 is reached, the control unit 18 feeds a stop signal to the motor 13 to stop the driving of the same. The dip switch 17 and the control unit 18 can set and control BGM, mechanical sound, flickering of a light and so on, as well as vary the probability of the above-mentioned number of confectioneries delivered.

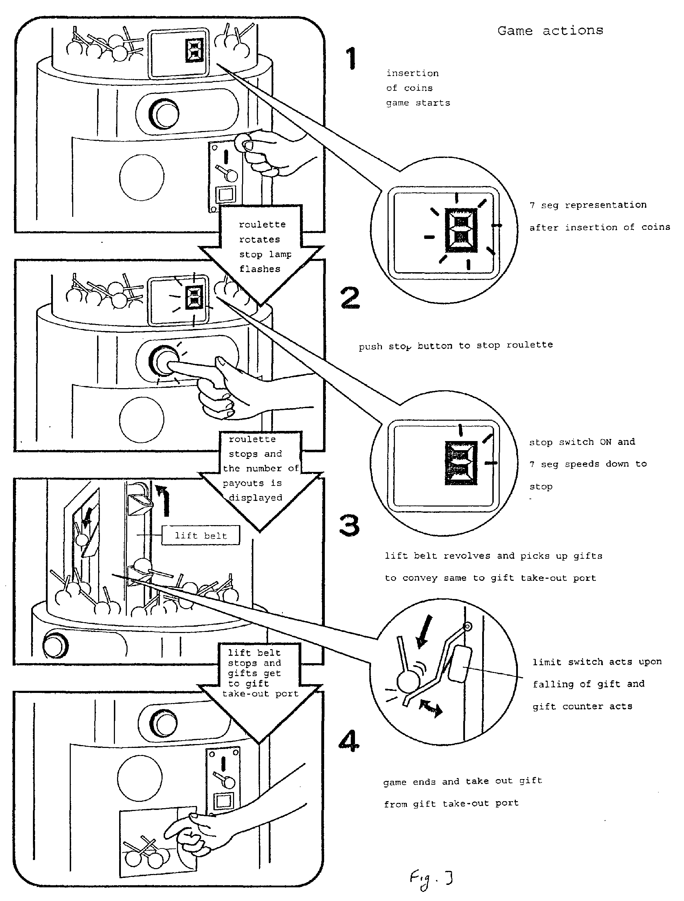

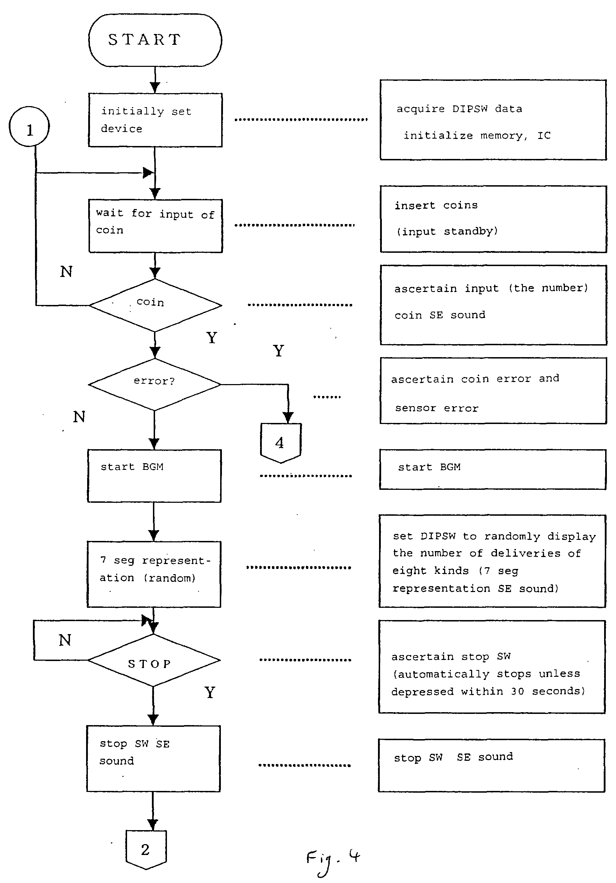

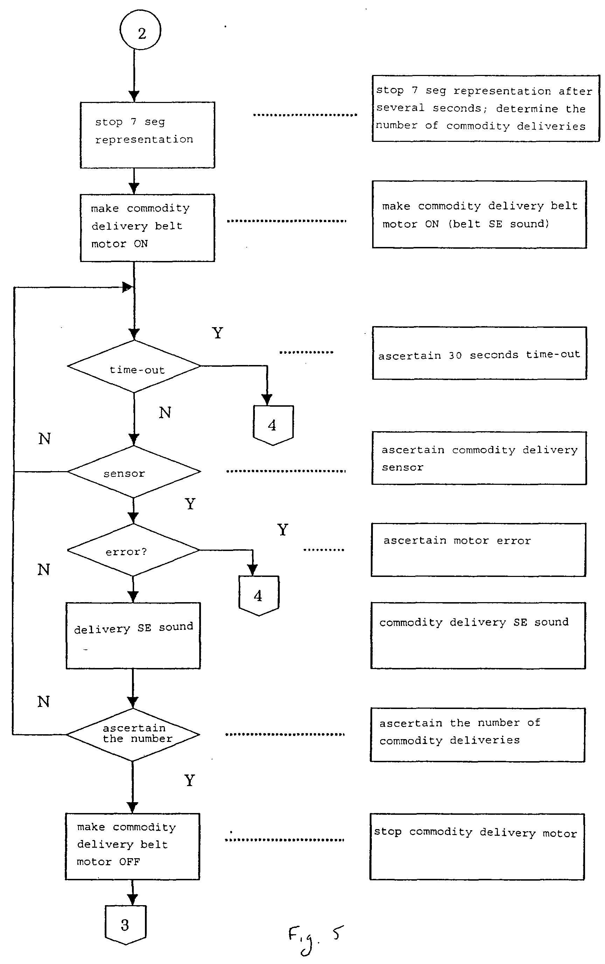

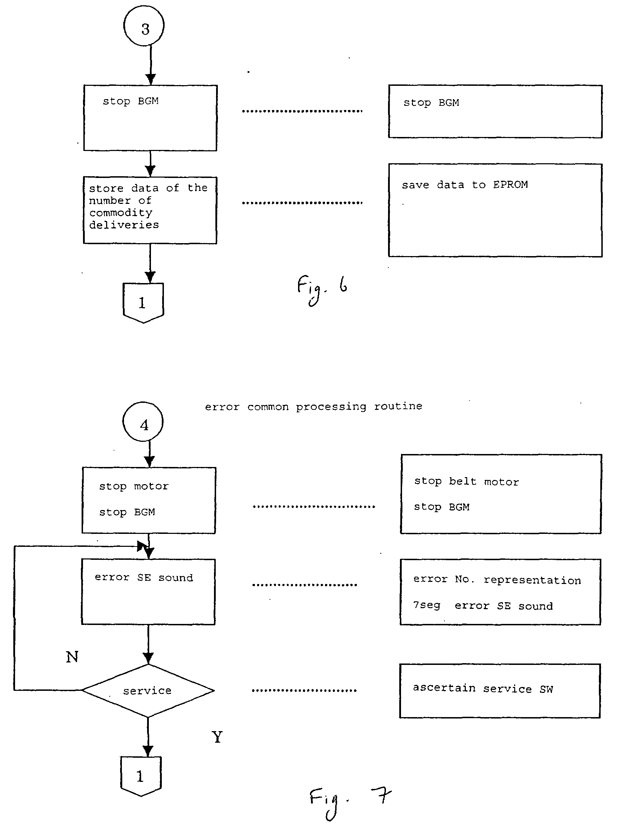

An explanation will now be given of the procedure of using the automatic confectionery vending machine to deliver confectionery, with reference to Figs. 3 to 6. Fig. 3 is an illustration of motions indicative of the procedure of motions in the case of using the automatic confectionery vending machine to get confectionery, and Figs. 4 to 6 are flowcharts showing the flow of motions in the case of using the automatic confectionery vending machine to get confectionery. Fig. 7 is a flowchart showing the flow of disposition of an error generated in the motion of getting confectionery.

First, when a power switch (not shown) provided on the housing 1 is turned ON, the device is started up ("START" in the drawings) as shown in Fig. 4, and data set in the dip switch 17 are acquired, simultaneously with which initialization of memories and ICs are carried out ("SETTING OF INITIALIZATION OF DEVICES" in the drawings). Upon completion of the initialization, the apparatus is on standby until insertion of a coin or coins by a user ("WAIT FOR INSERTION OF A COIN OR COINS" in the drawings).

When a user inserts a predetermined coin or coins into the slot 4 provided on the housing 1, the number of coins inserted is ascertained ("COIN" in the drawings), and further after the existence and nonexistence of an error or errors associated with coins are ascertained ("ERROR?" in the drawings), BGM is started in the case of nonexistence of coin error ("START BGM" in the drawings) and segmental representation of numerals within the range set in the dip switch 17 is randomly effected in the display unit 7 ("7 SEGMENTAL REPRESENTATION (RANDOM)" in the drawings).
Subsequently, when the stop button 6 provided in the housing 1 is depressed ("STOP" in the drawings), sounds are emitted to inform a user to that effect ("STOP SW•SE SOUNDS" in the drawings) and segmental representation in the display unit 7 is getting stopped ("2" in the drawings). In addition, in order to urge a user to push the stop button 6, it is desirable to inform the user to that effect as by turning on a light or emitting sounds upon start-up of segmental representation. It is also possible to set the apparatus to automatically stop segmental representation if pushing is not effected within a predetermined period of time. In addition, if a predetermined number of coins are not inserted in the step of ascertaining insertion of a coin or coins ("COIN" in the drawings), the state of waiting for insertion of a coin or coins is maintained. Also, when an error occurs on a coin or coins inserted, an error processing is carried out (TO "4" in the drawings). The error processing will be described later.

The segmental representation will now be briefly explained. In the preferred embodiment, a minimum number of confectioneries delivered is specified by setting of the dip switch 17 to enable beforehand setting three kinds of numeral values contiguous to the minimum number of confectioneries delivered, as a range of the number of confectioneries delivered. By making segmental representation of three kinds of numerals randomly or changing setting, it is possible to make segmental representation of the numerals randomly on the display unit 7 within the range of numeral values up to "9" at the maximum with the minimum number of confectioneries delivered as the starting point. For example, in the case where the minimum number of delivered confectioneries is "2", the range of the number of delivered confectioneries, containing three kinds of numerals, that is, "2-3-4", contiguous to the numeral is determined, and setting can be made such that the three kinds of numerals can be randomly represented or numerals up to "9" with "2" as the starting point can be randomly made in segmental representation. In the drawings, the minimum number of delivered confectioneries is "2" and the maximum representation is set to "8", and so "7seg representation" consisting of "2-3-4-5-6-7-8" is displayed. However, contents of segmental representation can be changed by modifying setting of the numeral of the minimum number of delivered confectioneries or the maximum representation. Also, the dip switch 17 can be set to increase or decrease the minimum number of delivered confectioneries in accordance with the number (amount of money) of coins inserted, and the possibility (payout rate) of the determined number of delivered confectioneries can be also varied to be made high and low.

In this manner, when the stop button 6 is depressed, the segmental representation is decreased in speed to be stopped as shown in Fig. 5, and the number of delivered confectioneries is determined within that range, in which the dip switch 17 is set ("STOPPAGE OF 7seg representation" in the drawings). The range of setting is such that, for example, in the case where the minimum number of delivered confectioneries is "2", the number of deliveries will be determined within the range of three kinds of numerals "2-3-4" as described previously. Also, while "7seg representation" is displayed in the figure, this relates to the embodiment in the case where the minimum number of deliveries is "2" and the maximum representation is "8", and segmental representation naturally differs in contents when specification and setting are modified for the minimum numeral and the maximum representation.

When the number of delivered confectioneries is determined, numerical data are then fed to the control unit 18, and the motor 13 is actuated upon receipt of a command from the control unit 18 to revolve the lift belt 12 engaged thereby, so that the plurality of pockets 14 provided on the lift belt 12 pick up and acquire confectioneries from below the receiving and bearing portion 9 ("COMMODITY DELIVERY BELT MOTOR ON" in the drawings). In addition, visual comicality may be performed by providing an agitating motor (not shown) for agitating confectioneries in the receiving and bearing portion 9 and driving the same in synchronism with the motor 13. In addition, it is desired that upon the start of driving of the motor 13 or of rotation of the lift belt 12, a lamp be flashed or sounds be emitted to inform a user of the stage of acquiring confectioneries. Also, a predetermined period of time is set for the pockets 14 to acquire confectioneries (30 seconds in the embodiment), and when a determined number of confectioneries delivered are not acquired even after the lapse of the period of time, there is caused time-out ("TIME-OUT" in the drawings), which is processed as an error ("TO "4"" in the drawings) as described later.

Candies acquired by the pockets 14 are transferred upward with the revolution of the lift belt 12 to go over a topmost portion along the upper pulley 11, and they then separate from and fall off the pockets 14 upon the start of descent as shown in Fig.2. Candies falling off abut against an arm 19 provided midway a falling path and are detected by the detection switch 16 to be counted thereby ("SENSOR" in the drawings). The push-type detection switch is provided midway the falling path, but the detection switch is not necessarily of push-type provided that it can count the number of confectioneries. Also, a location of installation of the switch is not necessarily in the falling path but may be in the vicinity of the delivery port 8. Also, it is checked at the time of delivery whether an error is generated on the motor 13 ("ERROR?" in the drawings). In the case where an error on the motor 13 is ascertained as the result of such checking, an error processing described later will be carried out ("TO "4"" in the drawings).

Confectionery falling off the pockets 14 and counted by the detection switch 16 are delivered to a user from the delivery port 8, at which sounds are emitted ("DELIVERY SE SOUNDS" in the drawings) to inform the user of delivery of confectioneries. Also, numerical data of confectioneries counted by the detection switch 16 are ascertainably compared at all times with numerical data of the number of deliveries determined ("ASCERTAIN THE NUMBER" in the drawings), and acquisition of confectioneries is continued until the time-out. When the numerical data thus counted correspond to the numerical data of the number of deliveries determined, revolution of the lift belt 12 is stopped with the stoppage of the motor 13, so that acquisition of confectioneries by the pockets 14 is terminated ("COMMODITY DELIVERY BELT/MOTOR OFF" in the drawings). Also, in the case where an agitating motor (not shown) for agitating confectioneries is provided, driving of such motor is also stopped.

When driving of the motor 13 is stopped in this manner, BGM having been played until then is also stopped ("BGM STOPPED" in the drawings), numerical data of the number of deliveries are written in storage means (not shown) in the control unit 18 ("STORE NUMERICAL DATA OF NUMBER OF COMMODITIES" in the drawings), all the steps are terminated, and the apparatus again stands by awaiting insertion of coins by a new user. In addition, EPROM, EEPROM or the like, into which data can be again written, is predetermined to be adopted as the storage means.

The procedure in the case of an error occurring will now be described with reference to Fig. 7. Three kinds of errors are presumed to occur; at the time of coin error, at the time of time-out and at the time of motor error. When respective errors occur, the control unit 18 issues an error command to stop driving of the motor 13 and also BGM ("STOP Motor, STOP BGM" in the drawings). In addition, while at the time of coin error, the motor 13 has not been actuated and BGM has also not been turned on, an error command is uneventfully issued from the control unit 18. When the motor 13 and BGM are stopped by the error command, an error message is displayed on the display unit 7 and an error SE sound is emitted from the speaker 5 to give notice of the occurrence of an error, and then a person in charge is called to ascertain a service switch, which returns the device to a usable condition ("SERVICE" in the drawings). When the device is put in a usable condition, the step of coin insertion ("WAIT FOR INSERTION OF A COIN OR COINS" in Fig.4) is reset, and then a user uses coins repaid from the person in charge to try again to acquire confectionery.

In this manner, since the pockets pick up confectionery from below to acquire the same, it is possible to reliably acquire confectionery, and since the confectionery are not grasped and conveyed, confectionery can be easily released and dropped at a point of time when they go over the uppermost point. According to the preferred embodiments of the invention, the number of confectioneries delivered is made variable by setting and the number of deliveries is determined within the range of setting, so that there is a feeling of a game in the receiving of the delivery of confectioneries. Further, since a minimum number of deliveries can be set, it is possible to eliminate that lack of economy, in which even one confectionery cannot be acquired although much money is paid.

## Claims

1. A method of delivering confectionery in an automatic confectionery vending machine (1), comprising the steps of:
revolving a lift belt (12) provided with a plurality of pockets (14), the pockets thereby acquiring a confectionery or confectioneries;
conveying a confectionery or confectioneries acquired by the pockets upward; and
separating a confectionery or confectioneries conveyed at a point of time when the pockets (14) go over a topmost point to begin descending.

2. A method as claimed in claim 1, further comprising the step of determining the number of confectioneries delivered on the basis of setting of a dip switch (17), prior to the step of using the pockets to acquire a confectionery or confectioneries.

3. A method as claimed in claim 1 or claim 2, further comprising the additional step of counting the number of confectioneries delivered with the use of a detection switch (16).

4. An automatic confectionery vending machine (1) for delivering a confectionery or confectioneries contained in a housing (3), comprising a strut (10) provided upright through a confectionery receiving and bearing portion in said housing, pulleys (11, 11') provided on upper and lower portions of the strut (10), a lift belt (12) mounted around the upper and lower pulleys (11, 11'), a plurality of pockets (14) provided on the lift belt (12), and a motor (13) as a drive source for revolving the lift belt (12).

5. An automatic confectionery vending machine as claimed in claim 4, further comprising a dip switch (17) for setting the possibility for the number of confectioneries being delivered.

6. An automatic confectionery vending machine as claimed in claim 4 or claim 5, further comprising a detection switch (16) for counting the number of confectioneries being delivered.

7. An automatic confectionery vending machine as claimed in any of claims 4 to 6, further comprising a display unit (7) provided on the housing for notification of the number of confectioneries being delivered.
